# EUROPÄISCHE PATENTSCHRIFT

(11) **EP 2 669 034 B1**
(45) Veröffentlichungstag und Bekanntmachung des Hinweises auf die Patenterteilung: **11.02.2015**
(21) Anmeldenummer: 13166750.3
(22) Anmeldetag: 07.05.2013
(51) Int. Cl.: B23D 31/04

(54) **Vorrichtung zum Besäumen von Bandmaterial**
Device for trimming strip material
Dispositif destiné au cisaillement de matériaux en bandes

(30) Priorität: 29.05.2012 DE 202012005197 U
(43) Veröffentlichungstag der Anmeldung: 04.12.2013
(73) Patentinhaber: Achenbach Buschhütten GmbH & Co. KG, 57223 Kreuztal (DE)
(72) Erfinder: Barten, Axel, 57078 Siegen (DE); Schlag, Harald, 57223 Kreuztal (DE)
(74) Vertreter: advotec.

(56) Entgegenhaltungen:
- DE-A1- 3 840 598
- FR-A5- 2 134 897
- US-A- 3 110 208

## Beschreibung

Die vorliegende Erfindung betrifft eine Besäumvorrichtung zum Besäumen einer Materialbahn aus Metall mit einer Längsschneideeinrichtung zum Abtrennen eines in Bahnlaufrichtung verlaufenden Saumstreifens und einer Querschneideeinrichtung zum Abtrennen von Saumschrottstücken vom Saumstreifen, wobei die Längsschneideeinrichtung eine mit einem Obermesser versehene Obermesserwelle und eine mit einem Untermesser versehene Untermesserwelle aufweist, und die Querschneideeinrichtung einen auf einer Zerhackerwelle angeordneten Zerhackerkopf mit einer Mehrzahl von auf dem Umfang des Zerhackerkopfs angeordneten Zerhackermessern aufweist, die zum Abtrennen der Saumstreifenschrottstücke mit einer Saumstreifenauflage zusammenwirken.

Mit Vorrichtungen der eingangs genannten Art wird Warm- und Kaltbandmaterial während des Walzprozesses an den Rändern besäumt, um auch quer zur Bandlaufrichtung eine gleichbleibende Qualität des Bandmaterials bis hin zu den Rändern zu gewährleisten. Die durch den Besäumvorgang ausgebildeten Saumstreifen werden zur Vereinfachung einer nachfolgenden Handhabung bzw. Entsorgung nachfolgend der Ausführung des sogenannten "Besäumschnittes" in Teilstücke mit definierter Länge unterteilt und dann als Saumschrott beispielsweise in einen Recyclingprozess überführt.

Aus der DE 20 2005 006 623 U1 ist eine derartige Vorrichtung bekannt, bei der die in Bahnlaufrichtung nachfolgend der Längsschneideeinrichtung angeordnete Querschneideeinrichtung durch eine Saumstreifenführungsstrecke, die mit einer Rollenführungseinrichtung versehen ist, räumlich von der Längsschneideeinrichtung getrennt ist. Darüber hinaus ist die mit zwei Zerhackerköpfen versehene Querschneideeinrichtung mit einer eigenen Antriebseinrichtung versehen, die unabhängig vom Antrieb der Längsschneideeinrichtung ausgebildet ist.

Die US 3 110 208 A zeigt eine Besäumvorrichtung zum Besäumen einer Materialbahn mit einer Schneideinrichtung, die sowohl die Funktion einer Längsschneideeinrichtung als auch die Funktion einer Querschneideeinrichtung aufweist. Die bekannte Schneideinrichtung weist ein Obermesser und ein mit dem Obermesser zusammenwirkendes Untermesser auf, welches gleichzeitig als Zerhackerkopf ausgebildet ist. Um eine seitliche Abführung eines durch die Schneideinrichtung von der Materialbahn abgetrennten Randstreifens zu ermöglichen, sind das Obermesser und das Untermesser der Schneideinrichtung um ihre gemeinsame Mittelachse gegenüber der Materialbahn verschwenkt.

Der vorliegenden Erfindung liegt die Aufgabe zugrunde, eine Vorrichtung der eingangs genannten Art vorzuschlagen, die die Ausbildung einer Führungseinrichtung ohne Verschwenken der Schneideinrichtung ermöglicht.

Zur Lösung dieser Aufgabe weist die erfindungsgemäße Vorrichtung die Merkmale des Anspruchs 1 auf.

Erfindungsgemäß ist die mit den Zerhackermessern des Zerhackerkopfes zusammenwirkende Saumstreifenauflage von einem Saumstreifenkontaktbereich der Untermesserwelle gebildet. Daraus ergeben sich hinsichtlich einer kompakten Ausbildung der Vorrichtung gleich zwei Vorteile, da zum einen die Anordnung eines zweiten Zerhackerkopfes, der mit dem ersten Zerhackerkopf zusammenwirkt und mit diesem einen Zerhackerspalt ausbildet, durch den der Saumstreifen zur Abtrennung von Teilstücken hindurchgeführt wird, nicht mehr notwendig ist. Stattdessen wirkt der Zerhackerkopf mit der ohnehin für die Ausbildung der Längsschneideeinrichtung notwendigen Untermesserwelle zusammen, die mit dem Zerhackerkopf einen Zerhackerspalt ausbildet und die zur Ausführung des Trennvorgangs notwendigen Reaktionskräfte des Zerhackerkopfs aufnimmt.

Zum anderen entfällt durch die funktionale Kombination des Zerhackerkopfes mit der Untermesserwelle zur Ausbildung der Querschneideeinrichtung die Notwendigkeit, eine gesonderte Übertragungs- oder Führungseinrichtung vorzusehen, die eine Führung des Saumstreifens zwischen der Längsschneideeinrichtung und der Querschneideeinrichtung ermö glicht.

Aufgrund der erfindungsgemäßen Ausgestaltung, bei der die Obermesserwelle einerseits und der Zerhackerkopf andererseits unmittelbar mit der Untermesserwelle zusammenwirken, bilden die Obermesserwelle, die Untermesserwelle und der Zerhackerkopf in Kombination miteinander inhärent die Führungseinrichtung aus, so dass eine gesondert ausgebildete und zwischen der Längsschneideeinrichtung und der Querschneideeinrichtung angeordnete Führungseinrichtung entfällt.

Bei einer besonders vorteilhaften Ausführungsform ist die Querschneideeinrichtung mit einer mit dem Zerhackerkopf zusammenwirkenden Saumstreifenzugeinrichtung versehen, derart, dass einer durch Schneidkanten der Zerhackermesser auf den Saumstreifen ausgeübten Schneidkraft eine Zugkraft in Längsrichtung des Saumstreifens überlagert wird. Durch Einwirkung der Saumstreifenzugeinrichtung wird der Saumstreifenschrottstücke vom Saumstreifen abtrennende Schneidvorgang unterstützt, so dass zur Ausführung des Trennvorgangs auf eine Gegen-Schneidkante auf der Untermesserwelle verzichtet werden kann. Vielmehr kann der Trennvorgang durch einen Quetschvorgang erfolgen, bei dem durch Einwirkung der Schneidkante des Zerhackermessers auf den sich auf dem Saumstreifenkontaktbereich der Untermesserwelle abstützenden Saumstreifen der Saumstreifenquerschnitt bis auf einen Saumstreifenrestquerschnitt reduziert wird, der durch Einwirkung der Zugkraft durchtrennt werden kann.

Insbesondere ist es hierbei möglich, dass die Schneidkanten an einer Trennstelle, an der das Abtrennen der Saumstreifenschrottstücke vom Saumstreifen erfolgt, durch einen Schneidkantenabstand vom Saumstreifenkontaktbereich beabstandet sind, so dass bei Ausführung des Schneidvorgangs kein unmittelbarer Kontakt zwischen den Schneidkanten der Zerhackermesser und dem Saumstreifenkontaktbereich der Untermesserwelle besteht, und somit ein ansonsten möglicher Verschleiß der Oberfläche des Saumstreifenkontaktbereichs bzw. der Schneidkanten weitestgehend verhindert wird.

Wenn zur Ausbildung der Saumstreifenzugeinrichtung der Zerhackerkopf mit einer von einem Antriebsmotor angetriebenen Getriebeeinrichtung versehen ist, derart, dass der Zerhackerkopf mit einer gegenüber dem Saumstreifenkontaktbereich der Untermesserwelle erhöhten Umfangsgeschwindigkeit angetrieben wird, kann die Ausbildung der Zugkraft durch den Eingriff der Schneidkanten der Zerhackermesser in den Saumstreifen erzeugt werden. Auf diese Art und Weise dient der Zerhackerkopf selbst zur Ausbildung der Saumstreifenzugeinrichtung, so dass eine gesonderte Einrichtung nicht erforderlich ist, und somit die angestrebte Kompaktheit in noch größerem Ausmaß erreichbar ist.

Wenn die Schneidkanten der Zerhackermesser unter einem Schneidwinkel α gegenüber einer Längsachse der Zerhackerwelle geneigt sind, lässt sich die durch die Saumstreifenzugeinrichtung zur Unterstützung des Abtrennens von Saumschrottstücken auf den Saumstreifen aufgebrachte Zugkraft noch effektiver einsetzen.

Eine besonders gute Anschmiegung des Saumstreifens gegen den Saumstreifenkontaktbereich der Untermesserwelle lässt sich erreichen, wenn der Zerhackerkopf am Umfang und jeweils zwischen den Zerhackermessern angeordnete Saumstreifenniederhalter aufweist.

Eine weitere Erhöhung der Kompaktheit der gesamten Vorrichtung lässt sich erreichen, wenn die Längsschneideeinrichtung und die Querschneideeinrichtung von einem gemeinsamen Antriebsmotor angetrieben werden.

Insbesondere zur Unterstützung des störungsfreien Einlaufs eines Anfangsbereichs der Materialbahn in die Besäumvorrichtung ist es vorteilhaft, wenn der Längsschneideeinrichtung eine temporär positionierbare Führungseinrichtung zugeordnet ist. Dabei ergibt sich eine besonders raumsparende Anordnung, wenn die Führungseinrichtung zur temporären Anordnung schwenkbar um eine Längsachse der Obermesserwelle der Längsschneideeinrichtung angeordnet ist.

Nachfolgend wird eine bevorzugte Ausführungsform der Erfindung anhand der Zeichnungen näher erläutert. Es zeigen:
- **Fig. 1**: eine Ausführung der Besäumvorrichtung in Seitenansicht;
- **Fig. 2**: die Längsschneideeinrichtung der Besäumvorrichtung in einer Vorderansicht;
- **Fig. 3**: die Querschneideeinrichtung der Besäumvorrichtung in einer Vorderansicht.

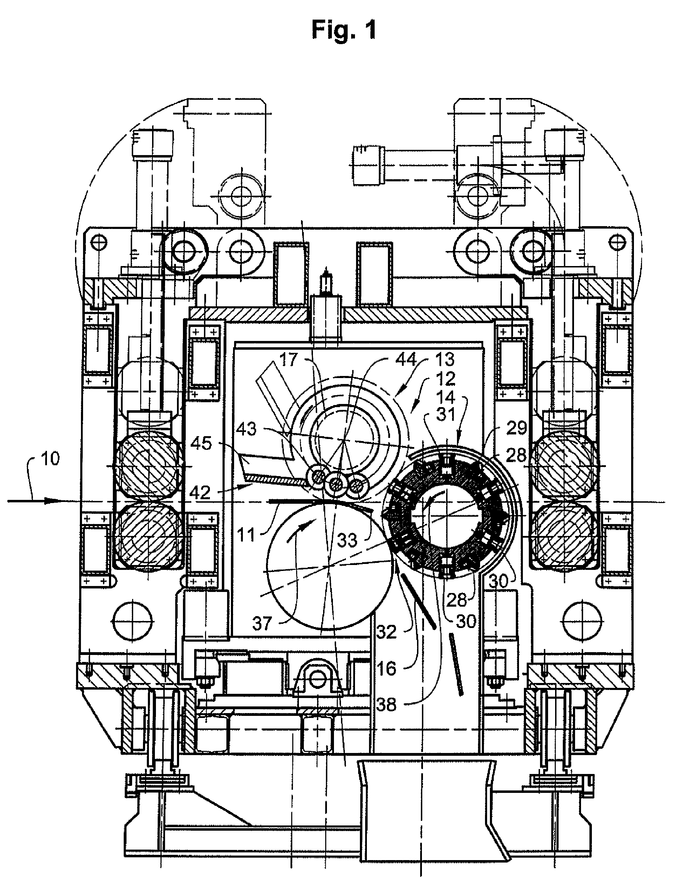

**Fig. 1** zeigt eine im vorliegenden Fall am linken Rand einer in Bahnlaufrichtung 10 angetriebenen Materialbahn 11 angeordnete Besäumvorrichtung 12. Die Besäumvorrichtung 12 umfasst eine Längsschneideeinrichtung 13 sowie eine Querschneideeinrichtung 14, die einander nachfolgend zunächst ein Abtrennen eines Saumstreifens 15 und anschließend ein Unterteilen des Saumstreifens 15 in einzelne Saumstreifenschrottstücke 16 ermöglichen.

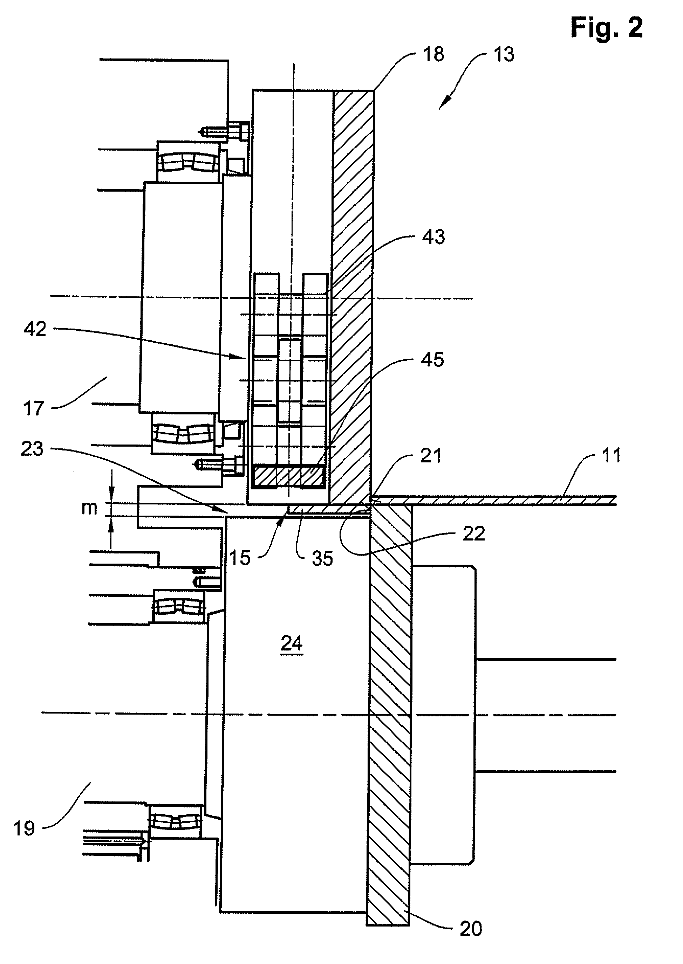

Wie eine Zusammenschau der **Fig. 1** **und** **2** zeigt, umfasst die Längsschneideeinrichtung 13 eine Obermesserwelle 17 mit einem daran angeordneten und hier als Kreismesser ausgeführten Obermesser 18 sowie eine Untermesserwelle 19 mit einem darauf angeordneten und hier ebenfalls als Kreismesser ausgeführten Untermesser 20. Das Obermesser 18 und das Untermesser 20 bewirken einen Scherenschnitt, bei dem das Obermesser 18 und das Untermesser 20 mit ihren einander benachbarten Schneidkanten 21, 22 aneinander vorbei bewegt werden.

Wie insbesondere aus der **Fig. 2** ersichtlich, ist das Untermesser 20 so auf der Untermesserwelle 19 angeordnet, dass zwischen der Schneidkante 22 des Untermessers 20 und einen Wellenbund 24 der Untermesserwelle 19 aufgrund eines Messerüberstands m ein Rücksprung 23 ausgebildet ist, so dass der Saumstreifen 15 an der Schneidkante 22 des Untermesser 20 vorbei und gegen einen auf dem Wellenbund 24 ausgebildeten Saumstreifenkontaktbereich 25 bewegt wird.

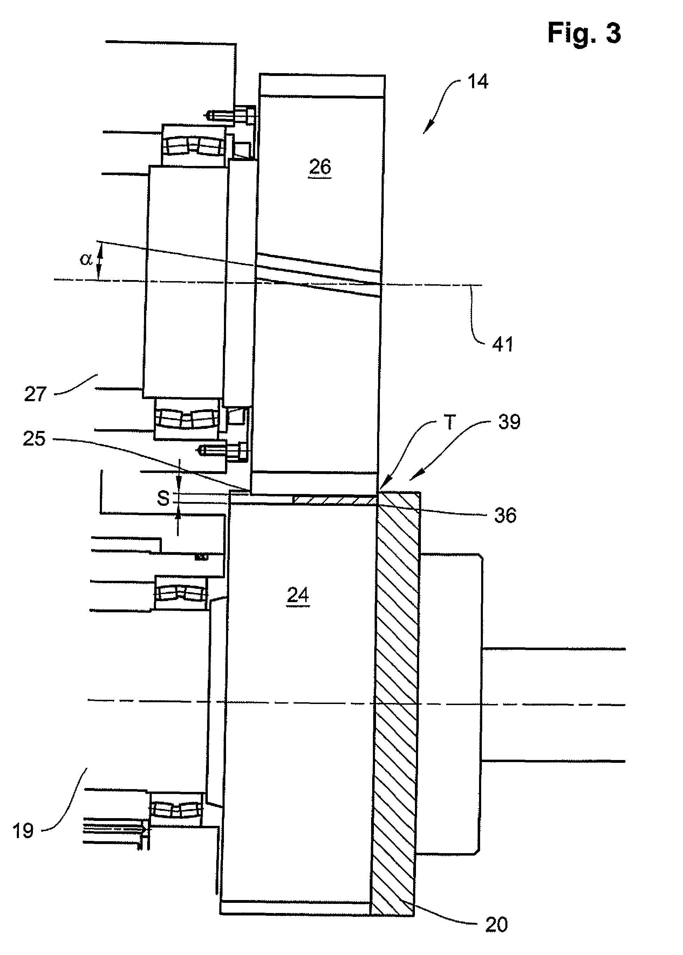

Wie weiterhin eine Zusammenschau der **Figuren 1** **und** **3** deutlich macht, ist der Längsschneideeinrichtung 13 in Bahnlaufrichtung 10 nachgeordnet die Querschneideeinrichtung 14 vorgesehen, die eine mit einem Zerhackerkopf 26 bestückte Zerhackerwelle 27 aufweist. Der Zerhackerkopf 26 wirkt wie das auf der Obermesserwelle 17 der Längsschneideeinrichtung 13 angeordnete Obermesser 18 mit der Untermesserwelle 19 zusammen.

Wie insbesondere die **Fig. 1** zeigt, ist der Zerhackerkopf 26 mit einer Mehrzahl am Umfang verteilt angeordneter Zerhackermesser 28 versehen, die jeweils eine Schneidkante 29 aufweisen. Zwischen den Zerhackermessern 28 sind am Umfang des Zerhackerkopfs 26 vorzugsweise federgestützte Saumstreifenniederhalter 30 vorgesehen, wobei sich im Falle des vorliegend dargestellten Ausführungsbeispiels jeweils ein Saumstreifenniederhalter 30 zwischen zwei Zerhackermessern 28 befindet. Die Schneidkanten 29 der Zerhackermesser 28 sowie Kontaktflächen 31 der Saumstreifenniederhalter 30 definieren mit dem auf der Untermesserwelle 19 ausgebildeten Saumstreifenkontaktbereich 25 einen Förderspalt 32 für den aus der Längsschneideeinrichtung 13 in Richtung auf die Querschneideeinrichtung 14 geförderten Saumstreifen 15, wobei der Saumstreifen 15 mit seinem Saumstreifenende 33 beim Eintritt in den Förderspalt 32 von den Saumstreifenniederhaltern 30 zur Anlage gegen den Saumstreifenkontaktbereich 25 gebracht wird.

Aufgrund der Rotation des Zerhackerkopfs 26 in der in **Fig. 1** angegebenen Rotationsrichtung 38 dringt nachfolgend im Bereich eines Zerhackerspaltes 39 die Schneidkante 29 des jeweils in Eingriff mit dem Saumstreifen 15 gelangenden Zerhackermessers 28 in den Saumstreife 15 ein, wobei zwischen der Schneidkante 29 und dem Saumstreifenkontaktbereich 25 ein Schneidkantenabstand s verbleibt (**Fig. 3**), derart, dass an einer Trennstelle T ein Saumstreifenquerschnitt 35 (**Fig. 2**) auf einen Saumstreifenrestquerschnitt 36 (**Fig. 3**) reduziert wird.

Wie in **Fig. 1** dargestellt, werden die Untermesserwelle 19 und die Zerhackerwelle 27 gegensinnig angetrieben, wobei die Untermesserwelle eine Rotationsrichtung 37 im Uhrzeigersinn und die Zerhackerwelle 27 die Rotationsrichtung 38 im Gegenuhrzeigersinn aufweist. Dabei erfolgt der Antrieb der Zerhackerwelle 27 derart, dass der Zerhackerkopf 26 an den Schneidkanten 29 der Zerhackermesser 28 eine zumindest geringfügig größere Umfangsgeschwindigkeit aufweist als die Untermesserwelle 19 in ihrem Saumstreifenkontaktbereich 25. Hierdurch wird in Folge des Eingriffs der Schneidkanten 29 in den Saumstreifen 15 eine Zugkraft auf den Saumstreifen 15 ausgeübt, so dass zum einen die Förderung des Saumstreifens 15 in den zwischen dem Zerhackerkopf 26 und der Untermesserwelle 19 ausgebildeten Zerhackerspalt 39 unterstützt wird und zum anderen eine Abtrennung eines Saumschrottstücks 16 vom Saumstreifen 15 in dem bereits bis auf den Saumstreifenrestquerschnitt 36 reduzierten Saumstreifenquerschnitt 35 erfolgt.

Weiterhin wird die abtrennende Wirkung der Schneidkanten 29 noch dadurch unterstützt, dass die Schneidkanten 29 der Zerhackermesser 28 unter einem Schneidwinkel α gegenüber einer Längsachse 41 der Zerhackerwelle 27 geneigt sind.

Wie aus den **Figuren 1** **und** **2** ersichtlich kann im Einzugsbereich der Längsschneideeinrichtung 13 eine Führungseinrichtung 42 vorgesehen werden, die im vorliegenden Fall mit einer Mehrzahl von Stützrollen 43 versehen ist, welche an einer schwenkbar um eine Längsachse 44 der Obermesserwelle 17 angeordneten Führungsausleger 45 angebracht sind und ein Einführen bzw. Einfädeln eines der Besäumvorrichtung 12 in Bahnlaufrichtung 10 zugeförderten Endes der Materialbahn 11 in die Besäumvorrichtung 12 bzw. die Längsschneideeinrichtung 13 erleichtert. Im stationären Betrieb, also wenn das freie Ende der Materialbahn 11 die Besäumvorrichtung 12 bereits in Bahnlaufrichtung 10 passiert hat, befindet sich die Führungseinrichtung 42 in ihrer ausgeschwenkten Relativanordnung positioniert, die in **Fig. 1** in strichpunktierter Darstellung des Führungsauslegers 45 angedeutet ist.

## Patentansprüche

1. Besäumvorrichtung (12) zum Besäumen einer Materialbahn (11) aus Metall mit einer Längsschneideeinrichtung (13) zum Abtrennen eines in Bahnlaufrichtung (10) verlaufenden Saumstreifens (15) und einer Querschneideeinrichtung (14) zum Abtrennen von Saumstreifenschrottstücken (16) vom Saumstreifen, wobei die Längsschneideeinrichtung eine mit einem Obermesser (18) versehene Obermesserwelle (17) und eine mit einem Untermesser (20) versehene Untermesserwelle (19) aufweist, und die Querschneideinrichtung einen auf einer Zerhackerwelle (27) angeordneten Zerhackerkopf (26) mit einer Mehrzahl von auf dem Umfang des Zerhackerkopfes angeordneten Zerhackermessern (28) aufweist, die zum Abtrennen der Saumstreifenschrottstücke mit einer Saumstreifenauflage zusammenwirken,
**dadurch gekennzeichnet,**
**dass** die Saumstreifenauflage von einem Saumstreifenkontaktbereich (25) der Untermesserwelle gebildet ist, und die Querschneideeinrichtung der Längsschneideeinrichtung in Bahnlaufrichtung nachgeordnet ist.

2. Vorrichtung nach Anspruch 1,
**dadurch gekennzeichnet,**
**dass** die Querschneideeinrichtung (14) eine mit dem Zerhackerkopf (26) zusammenwirkenende Saumstreifenzugeinrichtung aufweist, derart, dass einer durch Schneidkanten (29) der Zerhackermesser (28) auf den Saumstreifen (15) ausgeübten Schneidkraft eine Zugkraft in Längsrichtung des Saumstreifens überlagert wird.

3. Vorrichtung nach Anspruch 2,
**dadurch gekennzeichnet,**
**dass** die Schneidkanten (29) an einer Trennstelle T, an der ein Abtrennen der Saumstreifenschrottstücke (16) vom Saumstreifen (15) erfolgt, durch einen Schneidkantenabstand s vom Saumstreifenkontaktbereich (25) beabstandet sind.

4. Vorrichtung nach einem der vorangehenden Ansprüche,
**dadurch gekennzeichnet,**
**dass** zur Ausbildung der Saumstreifenzugeinrichtung der Zerhackerkopf (26) mit einer von einem Antriebsmotor angetriebenen Getriebeeinrichtung versehen ist, derart, dass der Zerhackerkopf mit einer gegenüber dem Saumstreifenkontaktbereich (25) der Untermesserwelle (19) erhöhten Umfangsgeschwindigkeit angetrieben wird.

5. Vorrichtung nach einem der vorangehenden Ansprüche,
**dadurch gekennzeichnet,**
**dass** die Schneidkanten (29) der Zerhackermesser (28) unter einem Schneidwinkel α gegenüber einer Längsachse (41) der Zerhackerwelle (27) geneigt sind.

6. Vorrichtung nach einem der vorangehenden Ansprüche,
**dadurch gekennzeichnet,**
**dass** der Zerhackerkopf (26) am Umfang und jeweils zwischen den Zerhackermessern (28) angeordnete Saumstreifenniederhalter (30) aufweist, die zur Erzielung einer Anschmiegung des Saumstreifens (15) gegen den Saumstreifenkontaktbereich (25) der Untermesserwelle (19) dienen.

7. Vorrichtung nach einem der vorangehenden Ansprüche,
**dadurch gekennzeichnet,**
**dass** die Längsschneideinrichtung (13) und die Querschneideeinrichtung (14) von einem gemeinsamen Antriebsmotor angetrieben werden.

8. Vorrichtung nach einem der vorangehenden Ansprüche,
**dadurch gekennzeichnet,**
**dass** der Besäumvorrichtung (12) eine temporär vor der Längsschneideeinrichtung (13) positionierbare Führungseinrichtung (42) vorgeordnet ist.

9. Vorrichtung nach Anspruch 8,
**dadurch gekennzeichnet,**
**dass** die Führungseinrichtung (42) schwenkbar um eine Längsachse (44) der Obermesserwelle (17) der Längsschneideeinrichtung (13) angeordnet ist.

## Claims

1. A trimming device (12) for trimming a material web (11) made of metal, having a longitudinal cutter (13) for splitting off an edge strip (15) that runs in the direction of web travel (10), and having a transverse cutter (14) for splitting off edge strip scrap pieces (16) from the edge strip, wherein the longitudinal cutter includes an upper blade shaft (17), being equipped with an upper blade (18), and a lower blade shaft (19), being equipped with a lower blade (20), and wherein the transverse cutter includes a chopper head (26) that is disposed on a chopper shaft (27), having a multiplicity of chopper blades (28) which are disposed on the circumference of the chopper head, and which cooperate with an edge strip rest for splitting off the edge strip scrap pieces,
**characterised in that**
the edge strip rest is formed by an edge strip contact region (25) of the lower blade shaft, and **in that** the transverse cutter is disposed downstream of the longitudinal cutter in the direction of web travel.

2. The device according to claim 1,
**characterised in that**
the transverse cutter (14) includes an edge strip tension means that cooperates with the chopper head (26), in such a manner that a tensile force is superimposed, in the longitudinal direction of the edge strip, on a cutting force that is exerted on the edge strip (15) by means of cutting edges (29) of the chopper blades (28).

3. The device according to claim 2,
**characterised in that**
the cutting edges (29), at a cut-off point T, at which the edge strip scrap pieces (16) are split off from the edge strip (15), are spaced apart from the edge strip contact region (25) by a cutting edge distance s.

4. The device according to one of the preceding claims,
**characterised in that,**
for constructing the edge strip tension means, the chopper head (26) is equipped with a gear means that is driven by a drive motor, in such a manner that the chopper head is driven with a circumferential speed that is increased as against the edge strip contact region (25) of the lower blade shaft (19).

5. The device according to one of the preceding claims,
**characterised in that**
the cutting edges (29) of the chopper blades (28) are inclined by a cutting angle α as against a longitudinal axis (41) of the chopper shaft (27).

6. The device according to one of the preceding claims,
**characterised in that**
the chopper head (26) includes edge strip hold-down units (30) that are disposed at the circumference and, in each instance, between the chopper blades (28), the hold-down units serving to achieve that the edge strip (15) be held tightly against the edge strip contact region (25) of the lower blade shaft (19).

7. The device according to one of the preceding claims,
**characterised in that**
the longitudinal cutter (13) and the transverse cutter (14) are driven by a common drive motor.

8. The device according to one of the preceding claims,
**characterised in that**
a guide means (42) that can temporarily be positioned in front of the longitudinal cutter (13) is disposed upstream of the trimming device (12).

9. The device according to claim 8,
**characterised in that**
the guide means (42) is disposed so as to be pivotable about a longitudinal axis (44) of the upper blade shaft (17) of the longitudinal cutter (13).

## Revendications

1. Dispositif (12) de cisaillage pour cisailler une bande (11) de matériau en métal, ayant un découpeur (13) longitudinal pour détacher une bande (15) de bord qui passe dans la direction (10) de passage de la bande de matériau, et ayant un découpeur (14) transversal pour détacher des pièces (16) de ferraille de bande de bord de la bande de bord, dans lequel le découpeur longitudinal présente un arbre (17) de lame supérieure, pourvu d'une lame (18) supérieure, et un arbre (19) de lame inférieure, pourvu d'une lame (20) inférieure, et dans lequel le découpeur transversal présente une tête (26) d'hacheur qui est disposée sur un arbre (27) d'hacheur, ayant une pluralité de lames (28) d'hacheur qui sont disposées sur la périphérie de la tête d'hacheur, et qui coopèrent avec un repose pour la bande de bord pour détacher les pièces de ferraille de bande de bord,
**caractérisé en ce que**
le repose pour la bande de bord est formé par une région (25) de contact de bande de bord appartenant à l'arbre de lame inférieure, et **en ce que** le découpeur transversal est disposé en aval par rapport au découpeur longitudinal dans la direction de passage de la bande de matériau.

2. Dispositif selon la revendication 1,
**caractérisé en ce que**
le découpeur (14) transversal présente un équipement de traction pour la bande de bord, l'équipement coopérant avec la tête (26) d'hacheur, de telle manière qu'une force de traction, dans la direction longitudinale de la bande de bord, superpose une force de coupe qui est exercée sur la bande (15) de bord au moyen de bordures (29) de coupe des lames (28) d'hacheur.

3. Dispositif selon la revendication 2,
**caractérisé en ce que**
les bordures (29) de coupe, à un point de sectionnement T, auquel les pièces (16) de ferraille de bande de bord sont détachées de la bande (15) de bord, sont espacées de la région (25) de contact de bande de bord d'une distance s de bordure de coupe.

4. Dispositif selon l'une quelconque des revendications précédentes,
**caractérisé en ce que,**
pour construire l'équipement de traction pour la bande de bord, la tête (26) d'hacheur est pourvue d'un équipement de transmission qui est entraîné par un moteur d'entraînement, de telle manière que la tête d'hacheur est entraînée avec une vitesse de périphérie qui est élevée par comparaison avec la région (25) de contact de bande de bord appartenant à l'arbre (19) de lame inférieure.

5. Dispositif selon l'une quelconque des revendications précédentes,
**caractérisé en ce que**
les bordures (29) de coupe des lames (28) d'hacheur sont inclinées d'un angle de coupe α par comparaison avec un axe (41) longitudinal de l'arbre (27) d'hacheur.

6. Dispositif selon l'une quelconque des revendications précédentes,
**caractérisé en ce que**
la tête (26) d'hacheur présente des serre-flans (30) pour la bande de bord qui sont disposes à la périphérie et chaque fois entre les lames (28) d'hacheur, les serre-flans servant pour atteindre que la bande (15) de bord soit tenue fermement contre la région (25) de contact de bande de bord appartenant à l'arbre (19) de lame inférieure.

7. Dispositif selon l'une quelconque des revendications précédentes,
**caractérisé en ce que**
le découpeur (13) longitudinal et le découpeur (14) transversal sont entraînés par un moteur d'entraînement commun.

8. Dispositif selon l'une quelconque des revendications précédentes,
**caractérisé en ce qu'**
un équipement (42) de guidage qui peut temporairement être positionné avant le découpeur (13) longitudinal est disposé en amont par rapport au dispositif (12) de cisaillage.

9. Dispositif selon la revendication 8,
**caractérisé en ce que**
l'équipement (42) de guidage est disposé de façon à pouvoir pivoter autour d'un axe (44) longitudinal de l'arbre (17) de lame supérieure du découpeur (13) longitudinal.
